(19) Europäisches Patentamt / European Patent Office / Office européen des brevets

(11) **EP 1 641 274 B1**

(12) **EUROPEAN PATENT SPECIFICATION**

(45) Date of publication and mention of the grant of the patent:
**05.06.2013 Bulletin 2013/23**

(51) Int Cl.:
*H04N 7/26* (2006.01)    *H04N 7/36* (2006.01)
*H04N 7/50* (2006.01)

(21) Application number: **04022674.8**

(22) Date of filing: **23.09.2004**

(54) **Video coding employing an image de-graining loop-filter**

Videocodierung mit einem Schleifenfilter zur Bildkornentfernung

Codage vidéo avec utilisation d'un filtre à boucle pour la réduction du grainage d'image

(84) Designated Contracting States:
**AT BE BG CH CY CZ DE DK EE ES FI FR GB GR HU IE IT LI LU MC NL PL PT RO SE SI SK TR**

(43) Date of publication of application:
**29.03.2006 Bulletin 2006/13**

(73) Proprietor: **Panasonic Corporation**
**Kadoma-shi**
**Osaka 571-8501 (JP)**

(72) Inventors:
• **Wedi, Thomas**
**64823 Gross-Umstadt (DE)**
• **Kadono, Shinya, Dr.**
**Nishinomiya 663-8113 (JP)**

(74) Representative: **Grünecker, Kinkeldey,**
**Stockmair & Schwanhäusser**
**Leopoldstrasse 4**
**80802 München (DE)**

(56) References cited:
**EP-A- 1 408 697**     **US-A1- 2004 032 908**

• **CHRISTINA GOMILA ET AL: "SEI message for film grain encoding" JOINT VIDEO TEAM (JVT) OF ISO/IEC MPEG & ITU-T VCEG (ISO/IEC JTC1/SC29/WG11 AND ITU-T SG16 Q6), 23 May 2003 (2003-05-23), pages 1-14, XP002314774**
• **TAMBANKAR A ET AL: "An overview of H.264 / MPEG-4 part 10" PROCEEDINGS OF MULTIMEDIA COMMUNICATIONS, IOS PRESS, vol. 1, 2 July 2003 (2003-07-02), pages 1-51, XP010650106 AMSTERDAM, NL**
• **TOPIWALA P: "STATUS OF THE EMERGING ITU-T/H.264 / ISO/MPEG-4, PART 10 VIDEO CODING STANDARD" PROCEEDINGS OF THE SPIE, SPIE, BELLINGHAM, VA, US, vol. 4790, 8 July 2002 (2002-07-08), pages 261-277, XP008019409 ISSN: 0277-786X**
• **"A Guide to MPEG Fundamentals & Protocol Analysis" [Online] 14 January 2003 (2003-01-14), BROADCASTPAPERS.COM , XP002314777 Retrieved from the Internet: URL:http://web.archive.org/web/20030114143 207/http://www.broadcastpapers.com/sigdis/ TektronixMPEGGuide+-+comp11.htm> [retrieved on 2005-01-24] Section 2, Paragraph 2.12 * the whole document ***

**Description**

The present invention relates to the encoding and decoding of motion picture video data. Particularly, the present invention relates to a method and an apparatus for encoding and decoding video data, including film grain information, by reducing the amount of encoded data.

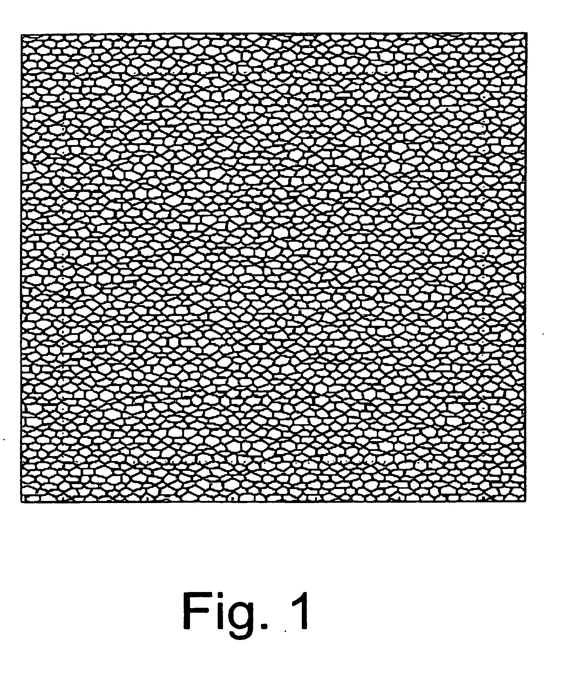

A motion picture film consists of silver-halide crystals, which are dispersed within a photographic emulsion of the film. Each image recorded on the photographic film is generated by exposing and developing the silver-halide crystals. In color images, the silver is chemically removed after the development. However, the silver crystal structure remains after development in the form of tiny grains of dye. Due to the random form of silver crystals in the emulsion, the grains are randomly formed and distributed within the image. An illustrative example of a grain structure is shown in Fig. 1. A perceivable grain structure is called film grain.

A viewer watching a motion picture reproduction does not recognize the individual grains which have a size of about 0.002 mm down to above one-tenth of that size. However, the viewer will perceive groups of grains and identify same as film grain.

For enhancing the resolution of the images, the perception of film grain is likewise increased. Specifically, film grain is clearly noticeable in cinema reproductions and in high-definition video images. On the other hand, film grain is of less importance for standard television images and for even smaller television display formats.

Motion pictures are being adopted in increasing numbers of applications, ranging from video-telephoning and video-conferencing to DVD and digital television. When a motion picture is being transmitted or recorded, a substantial amount of data has to be sent through conventional transmission channels of limited available frequency bandwidth or has to be stored on conventional storage media of limited data capacity. In order to transmit and store digital data on conventional channels/media, it is inevitable to compress or reduce the volume of digital data.

For the compression of video data, a plurality of video encoding standards has been developed. Such video standards are, for instance, ITU-T standards denoted with H.26x and ISO/IEC standards denoted with MPEG-x. The most up-to-date and advanced video encoding standards are currently the standards denoted as H.264 /AVC or MPEG-4 / AVC.

The encoding approach underlying most of these standards consists of the following main stages:

(a) Dividing each individual frame into blocks of pixels in order to subject each video frame to data compression at a block level.

(b) Reducing spatial redundancies within a video frame by applying each block of video data to a transform from the spatial domain into the frequency domain.

(c) Quantizing the resulting transform coefficients.

(d) Entropy encoding the quantized transform coefficients.

(e) Exploiting temporal dependencies between blocks of subsequent frames in order to only transmit changes between subsequent frames. This is accomplished by employing a motion estimation/compensation technique.

Among the various video compression techniques, the so-called hybrid coding technique is known to be the most effective. The hybrid coding technique combines temporal and spatial compression techniques together with statistical coding. Most hybrid techniques employ motion-compensated Differential Pulse Code Modulation (DPCM), two-dimensional Discrete Cosine Transform (DCT), quantization of DCT coefficients, and a Variable Length Coding (VLC).

The motion compensated DPCM is a process of determining the movement of an image object between a current frame and a previous frame, and predicting the current frame according to the determined motion to produce differential signals representing the differences between the current frame and its prediction.

As film grain is temporarily uncorrelated between subsequent images, the film grain information cannot be predicted by employing motion compensated prediction. Consequently, the prediction error of a standardized video codec (for instance H.264/AVC) includes film grain information twice. Firstly, the prediction error includes the film grain component of the predicted image which is not part of current image to be encoded. Secondly, the prediction error includes the film grain information of the current image which - on the other hand - is not included in the prediction image.

The prediction error component resulting from both film grain components can be calculated as follows:

$$e = s - p$$

wherein $s$ represents the film grain component of the image to be encoded and $p$ represents the film grain component of the image predicted by the video encoder. The mean value of the film grain information of each image is 0.

The energy of the prediction error stemming from the individual film grain information included in subsequent images can be calculated as follows:

$$E[e^2] = E[(s-p)^2] = E[s^2] - 2E[sp] + E[p^2]$$

The film grain components $s$ and $p$ stemming from a prediction image and the current image are uncorrelated. The expectation of $E[sp]$ in the above equation is consequently 0. The energy of the prediction error stemming from film grain can thus be calculated by the following equation:

$$E[e^2] = E[s^2] + E[p^2]$$

When assuming that the energy of the film grain information in the original image is identical to the energy of the film grain information of the prediction image, the energy of the prediction error is twice as large as the energy of the film grain information within each of the images.

The article "SEI message for film grain encoding", Christina Gomila, Joint Video Team of ISO/IEC MPEG & ITU-T VCEG, May 23, 2003 pages 1 - 14 describes an encoding/decoding of video images including film grain. The video data is separated into data without film grain and additional film grain data. An additional parameterization describing the current film grain is calculated. The calculated parameters are attached to the encoded video data without film grain. For this purpose, the film grain parameters are included in a SEI message. A decoder receives the encoded image data and the additional film grain parameters. Based on the film grain parameters, new film grain is simulated and added to the decoded image data.

The articles "An overview of H.264 / MPEG-4 part 10" (Proceedings of Multimedia Communications, July 2003, pages 1- 51) and "Status of the Emerging ITU-T/H.264" (Proceedings of the SPIE, July 2002, pages 261 - 277) describe a conventional predictive encoding of video image data. Improved prediction methods are described for improving the coding efficiency, error robustness and network friendliness.

As the differences in film grain information between the prediction image and the current image is included into the encoded video data and results in a correspondingly increased amount of data, the present invention aims to reduce the amount of data caused by the uncorrelated film grain information when applying a predictive coding approach.

This is achieved by the features of the independent claims.

It is the particular approach of the present invention to improve the accuracy of the prediction of the predicted image data. For this purpose, the film grain information of the predicted video data which is known to be uncorrelated to the film grain information of the current video data to be encoded is removed from the predicted video data. Consequently, the prediction error data do not need anymore to subtract the false prediction of film grain information from the predicted image data. In this manner, the amount of data required for the prediction error can be reduced considerably. Thus, the storage capacity or transmission bandwidth needed for the encoded data can be reduced accordingly.

Specifically, the de-graining filter of the present invention totally removes the film grain information from the reference image data. The removal of film grain information $p$ from the prediction data causes the energy of the film grain information $p$ to be $E[p^2] = 0$. Consequently, the prediction error is reduced to:

$$E[e^2] = E[s^2]$$

Only a single film grain component is remaining in the prediction error, namely that of the video data to be encoded. Consequently, the coding efficiency is improved considerably by applying the present invention.

Preferably, the memory stores a plurality of decoded images and reference images. By increasing the number of reference images, the quality of the predicted image data and the coding efficiency can be improved.

The prediction quality and coding efficiency can be further improved by additionally storing the decoded video data without applying a de-graining filtering. By also storing the non-filtered video data, the encoding process may select between the de-grained image data and the non-filtered image data still including film grain.

Preferably, the filter characteristic of the de-graining filter can be set adaptively by changing filter coefficients of the de-graining filter. Accordingly, the filtering process can be adjusted in accordance with the degree or presence of film grain information in the video data to be encoded.

Preferably, a change of filter coefficients or a parameter indicating a change are included into the encoded data and transmitted to the decoding side. In this manner, the configuration parameters of the de-graining filter are transmitted to the decoder and a corresponding filter configuration is applied to the respective image data at the encoding and decoding sides.

Preferably, the filter order or the filter strength of the de-graining filter is changed in this manner.

According to further preferred embodiment, a de-blocking filter is applied to the decoded video data before applying the de-graining filter. The filter characteristics of the de-graining filter are set adaptively in accordance with the filtering result of the de-blocking filter. Accordingly, a de-graining filtering is only applied depending on the presence or degree of film grain information at the respective image position. An image quality degradation, in particular image artifacts caused by the de-graining filter, can be successfully avoided if no filtering is required.

Preferably, the de-graining filtering is applied depending on the spatial location within an image for applying the de-graining filtering. Accordingly, the filtering can be adapted to the block borders, in particular the result of the de-blocking filter.

Preferably, the de-graining filter is implemented in form of a motion compensated temporal filter.

Preferably, the video data resulting from the de-grained filtering is output at the decoding side.

The above and other objects and features of the present invention will become more apparent from the following description and preferred embodiments given in conjunction with the accompanying drawings, in which:

Fig. 1    illustrates an enlarged example of a film grain structure;

Fig. 2    schematically illustrates in block diagram form the configuration of a conventional hybrid video encoder;

Fig.3    schematically illustrates in block diagram form the configuration of a conventional hybrid video decoder;

Fig. 4    schematically illustrates in block diagram form the configuration of a hybrid video encoder with a de-graining filter in the decoding loop in accordance with the present invention;

Fig. 5    schematically illustrates in block diagram form, the configuration of a hybrid video decoder with a de-graining filter in the decoding loop in accordance with the present invention; and

Fig. 6    illustrates the principle of a motion compensated filtering for the de-graining filter in accordance with the present invention.

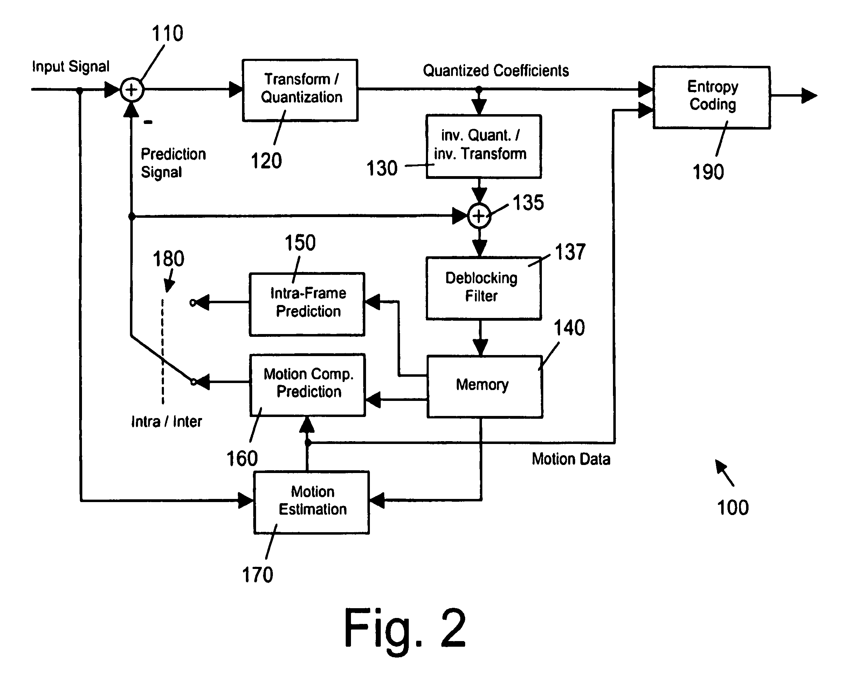

Referring to Fig. 2, an example of a hybrid video encoder is illustrated. The video encoder, generally denoted by reference numeral 100, comprises a subtractor 110 for determining differences between a current video image (input signal) and a prediction signal of the current image which is based on previously encoded images. A transform and quantization unit 120 transforms the resulting prediction error from the spatial domain to the frequency domain and quantizes the obtained transform coefficients. An entropy coding unit 190 entropy encodes the quantized transform coefficients.

The operation of the video encoder of Fig. 2 is as follows. The encoder employs a Differential Pulse Code Modulation (DPCM) approach which only transmits differences between the subsequent images of an input video sequence. These differences are determined in subtractor 110 which receives the video images to be encoded in order to subtract a prediction of the current images therefrom.

The prediction is based on the decoding result ("the locally decoded image") of previously encoded images on the encoder side. This is accomplished by a decoding unit incorporated into video encoder 100. The decoding unit performs the encoding steps in reverse manner. An inverse quantization and inverse transform unit 130 de-quantizes the quantized coefficients and applies an inverse transform to the de-quantized coefficients. In adder 135, the decoded differences are added to the prediction signal.

The motion compensated DPCM, conducted by the video encoder of Fig. 2, predicts a current field or frame from corresponding previous field or frame data. This prediction is based on an estimation of motion between current and previous fields or frames. The motion estimation is determined in terms of two-dimensional motion vectors, representing a displacement of pixels between the current and previous frames. Usually, motion estimation is performed on a block-by-block basis, wherein a block in a current frame is compared with blocks in previous frames until a best match is determined. Based on the comparison result, a displacement vector for each block of a current frame is estimated.

This is accomplished by a motion estimator unit 170, receiving the current input signal and the locally decoded images.

Based on the results of motion estimation, motion compensation performed by motion compensation prediction unit 160 provides a prediction utilizing the determined motion vector. The information contained in a prediction error block, representing the differences between the current and the predicted block, is then transformed into the transform coefficients by transform unit 120. Generally, a two-dimensional Discrete Cosine Transform (DCT) is employed therefore.

In accordance with the H.264 / AVC standard, the input image is divided into macro blocks. The macro blocks are encoded applying an "Intra" or "Inter" encoding mode. In Inter mode, a macro block is predicted by employing motion compensation as previously described. In Intra mode, the prediction signal is set to zero, but the video encoding standard H.264 / AVC additionally employs a prediction scheme based on already encoded macro blocks of the same image in order to predict subsequent macro blocks.

Only Intra-encoded images (I-type images) can be encoded without reference to any previously decoded image. The I-type images provide error resilience for the encoded video sequence. Further, entry points into bit streams of encoded data are provided by the I-type images in order to enable random access, i.e. to access I-type images within the sequence of encoded video images. A switch between Intra-mode, i.e. a processing by Intra-frame prediction unit 150, and Inter-mode, i.e. a processing by motion compensation prediction unit 160, is controlled by Intra/Inter switch 180.

Further, a de-blocking filter 137 may be provided in order to reduce the presence of blocking effects in the locally decoded image.

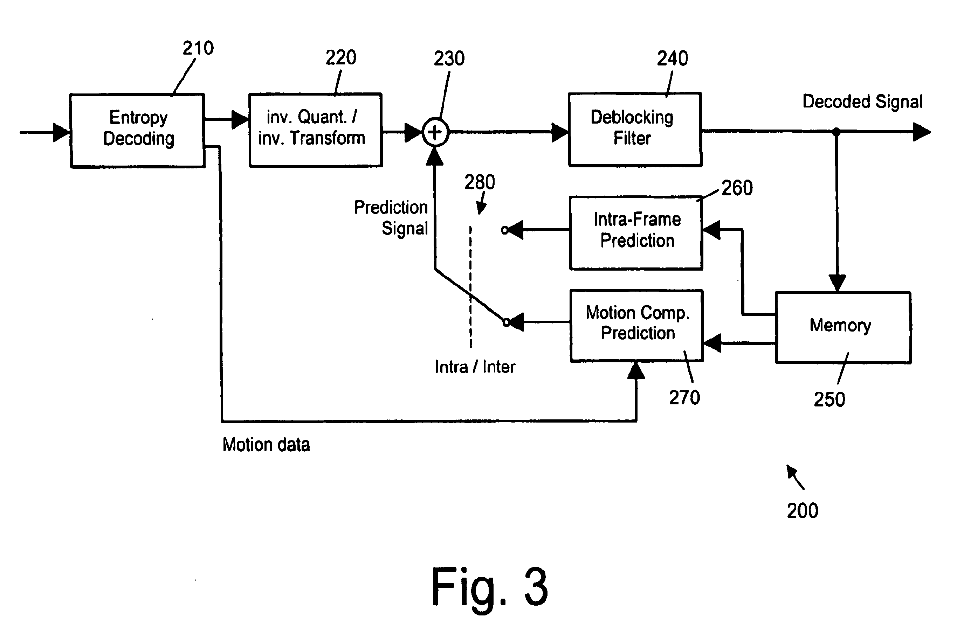

For reconstructing the encoded images at the decoder side, the encoding process is applied in reverse manner. A schematic block diagram, illustrating the configuration of the corresponding decoder generally denoted by reference numeral 200, is shown in Fig. 3. First, the entropy encoding is reversed in entropy decoding unit 210. The entropy decoded coefficients are submitted to an inverse quantizer and inverse transformer 220 and the motion data are submitted to motion compensation prediction unit 270. The quantized coefficient data are subjected to the inverse quantization and inverse transform unit 220. The reconstructed image block containing prediction differences is added by adder 230 to the prediction signal stemming from the motion compensation prediction unit 270 in Inter-mode or stemming from a Intra-frame prediction unit 260 in Intra-mode. The resulting image may be applied to a de-blocking filter 240 and the decoded signal is stored in memory 250 to be applied to prediction units 260, 270.

The encoding scheme described above in connection with Fig. 2 and Fig. 3 does not take the presence of film grain into account when predicting video data. As film grain is not temporarily correlated between subsequent images, the film grain structure of video data to be encoded cannot be predicted based on a motion compensated prediction scheme. The prediction error of a conventional video encoded and decoder contains film grain twice, namely:

1) A first component stems from the film grain information of the video data to be encoded, and

2) A second component stems from the film grain of the predicted video data.

It is the particular approach of the present invention to reduce the amount of data included in the prediction error. For this purpose, the present invention removes or at least reduces the film grain component of the prediction image. A de-graining filter is applied in the encoding loop for reducing or removing the film grain information from the prediction data.

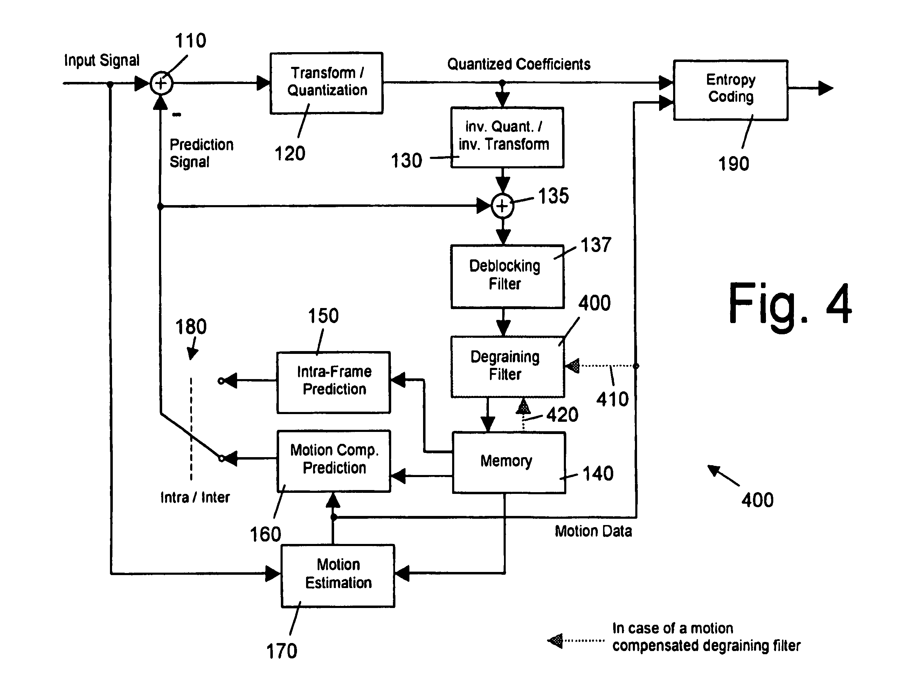

A video encoder in accordance with the present invention is illustrated in Fig. 4. In order to remove the film grain information from the reference image stored in memory 140, a de-graining filter is connected to the memory in order to remove film grain information from the decoded images before storing these images as reference images in memory 140.

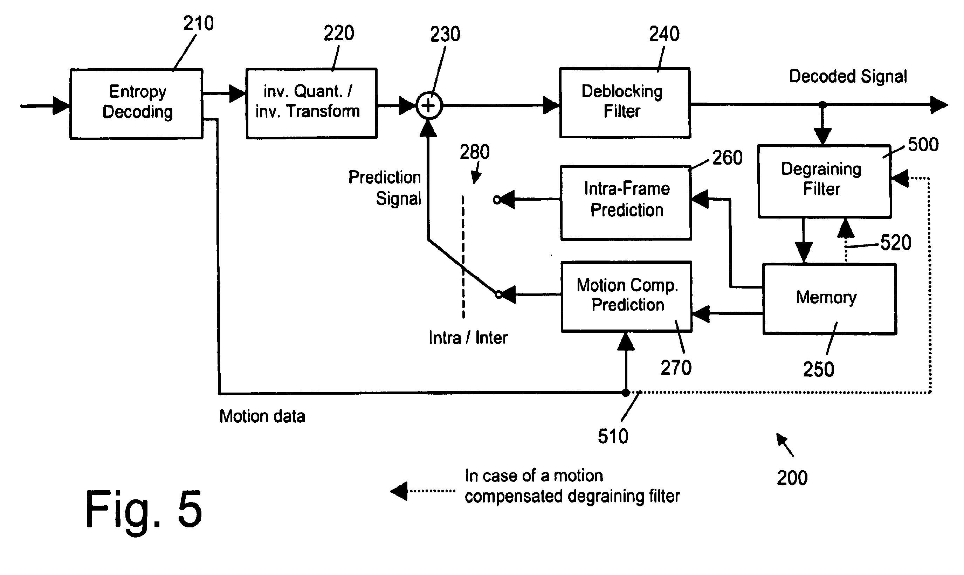

A correspondingly adapted configuration of a video decoder is illustrated in Fig. 5. In order to remove film grain from the decoded images before storage in memory in 250, a de-graining filter 500 is inserted into the decoding loop at the decoder side. Accordingly, film grain can be efficiently removed from those image data which is stored as reference data at the encoding side as well as at the decoding side.

Although not shown in Fig. 4 and Fig. 5, the de-graining filters 400 and 500 can be bridged in order to additionally store the unfiltered images as reference in the memories 140 and 250. By selecting such reference image data, the encoder may advantageously select non-filtered image data in order to obtain an improved encoding efficiency, if possible.

The characteristics of the de-graining filter 400, 500 are defined by a filter coefficients. The configuration of the filter coefficients can be changed in order to modify the filter order or the filter strength. In this manner, the filter characteristics can be adapted to the characteristics of the image data to be filtered. For instance, the presence or degree of film grain within the image data can be taken into account in order to control the configuration of filter characteristics or the parameters used therefore.

As illustrated in Fig. 4 and Fig. 5, a de-blocking filter 137, 240 is employed in order to reduce the influence of block borders of the individual image blocks on the perceived image quality. This filter only effects the image areas at the block borders. Those image areas which have been subjected to a de-blocking filtering generally have the film grain therein being removed or at least reduced. Consequently, the characteristics of the de-graining filtering applied to these image areas can be adapted accordingly. For this purpose, the characteristics of the de-graining filter can be set depending on the spatial location inside the image for applying the de-graining filtering. As the division of each image into blocks is performed in accordance with a prescribed rule, such an adaptation of the filter characteristics can be done in simple manner based on a predefined relation between the filter characteristics and the image position.

The decoder 200 as illustrated in Fig. 5 only outputs the decoded video signal. This video signal has not yet been subjected to the de-graining filter 500. According to a particular embodiment of the present invention, the video signal output by the de-graining filter 500 is also output by the decoder 200 in order to provide both video signals to the user at the decoding side.

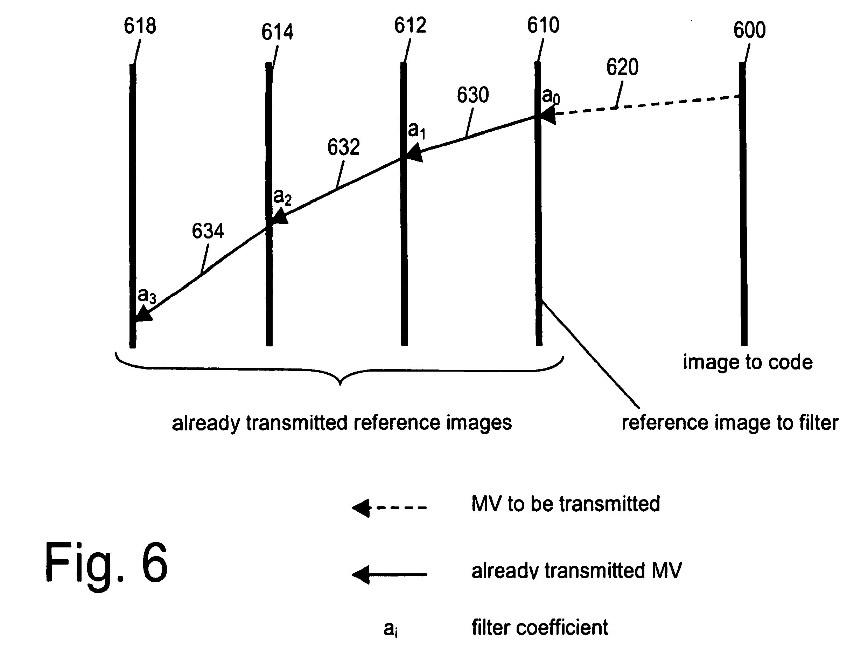

The implementation of the de-graining filter 400, 500 is not restricted to a particular kind of filter. A plurality of different approaches are known to a skilled person for this purpose. In the following, a motion compensated temporal filter will be described in connection with Fig. 6 as a particular example implementation. However, the present invention is not limited to this implementation.

The diagram of Fig. 6 illustrates a motion compensated temporal filter for removing the film grain information from the image data. Those image areas which relate to the same image content can be weighed in order to eliminate the uncorrelated film grain therefrom. The individual image portions which relate to the identical image content are identified based on the motion vectors available for each of the image areas from the encoding process.

For this purpose, the motion vectors 410, 510 and the previous reference images 420, 520 together with the motion vectors associated thereto are employed as illustrated by the dotted lines in Fig. 4 and Fig. 5. An image area of a current image 600 to be encoded is predicted based on motion vector 620 from a previous reference image 610. Corresponding image areas relating to an identical image content are identified by previous motion vectors 630, 632 and 634 which refer to previous reference images 612, 614 and 618. The previously transmitted and stored reference images and motion vectors are combined along a so-called motion trajectory defined by the concatenated motion vectors. The thus identified image areas which are located on the motion trajectory are weighed based on filter coefficients $a_i$ assigned to the respective images 610, 618.

The filter coefficients $a_i$ may be set equally. However, preferably those coefficient values $a_i$ have a lower value which have a larger temporal distance from the current reference image 610. The resulting image data is stored as reference image data in memory 140, 250.

The motion compensated temporal filter is implemented in a corresponding manner on the encoding as well as on the decoding side. While at the encoder the motion vectors stem from the motion estimator included therein, the decoder receives the motion vectors from the encoded bit stream.

In summary, it is the particular approach of the present invention to remove film grain from those images which are used as reference images for a predictive encoding. In this manner the amount of the prediction error to be transmitted from the encoder to the decoder is reduced compared to conventional encoding schemes. While conventionally the prediction error has to compensate on the one hand the predicted film grain stemming from the reference images and on the other hand the film grain included in the current image, the present invention simplifies these tasks as the film grain from the reference images is removed in advance. This is achieved by including a de-graining filter into the decoding loop and storing film grain free reference images. Consequently, the prediction error only includes the film grain of the current image to be encoded and the coding efficiency is increased accordingly.

**Claims**

1. A method for decoding video data, comprising the steps of:

   receiving encoded video data including prediction information (210),
   de-quantizing and inversely transforming said encoded video data (220),
   predicting said decoded video data based on de-grain filtered reference video data in accordance with said received prediction information (260, 270, 280),
   adding said de-quantized and inversely transsformed video data and said predicted video data in order to obtain decoded video data (230),
   applying a de-blocking filtering to said decoded video data (240),
   outputting the decoded video data as decoded signal after said de-blocking filtering,
   applying a de-graining fihering (500) to said decoded video data after said deblocking filtering in order to remove film grain from said decoded video data, and in order to obtain de-grain filtered video data, and
   storing said de-grain filtered video data in a memory (250) as reference video data.

2. A method according to claim 1, wherein said video data including a plurality of subsequent images, and said memory (250) storing reference video data in image form.

3. A method according to claim 2, wherein said memory (250) storing a plurality of decoded images as reference images.

4. A method according to claim 3, wherein said prediction step selecting video data from one of said plurality of reference images for obtaining said predicted video data.

5. A method according to any of claims 2 to 4, wherein the video data of each image is divided into a plurality of blocks which are individually decoded.

6. A method according to any of claims 1 to 5, wherein the filter characteristics of the de-graining filtering are adaptively set by changing the filter coefficients of said de-graining filtering.

7. A method according to claim 6, wherein a change of said filter coefficients or a parameter indicating the change is included within the encoded video data.

8. A method according to claim 7, wherein said filter coefficients are changed to adpat the fitter order or the filter strength.

9. A method according to any of claims 1 to 8, further comprising the step of applying a de-blocking filtering to said decoded video data before applying said de-graining filtering and wherein the filter characteristics of said de-graining filtering being set adaptively to the filtering result of said de-blocking filtering.

10. A method according to any of claims 1 to 9, wherein the filter characteristics of said de-graining filtering being set differently depending on the spatial location within an image for applying the de-graining filtering.

11. A method according to any of claims 1 to 10, wherein said de-graining filtering being implemented in form of a motion compensated temporal filter.

12. A method according to claim 11, wherein said received encoded video data including motion vectors (510) and wherein said motion compensated temporal filter employing said received motion vectors (510).

13. A method according to claim 12, wherein said step of storing decoded video data as reference video data in said memory (140) further storing the motion vectors associated to said reference video data.

14. A method according to claim 13, wherein said motion compensated temporal filter obtaining reference video data (420) from said memory (140) together with the motion vectors associated thereto.

15. A decoding apparatus for decoding video data, comprising:

a de-quantization unit and an inverse transform unit (220) for de-quantizing and inversely transforming said encoded video data,
a prediction unit (260-280) for predicting said decoded video data based on de-grain filtered reference video data in accordance with prediction information of said encoded video data,
an adder (230) for adding said de-quantized and inversely transformed video data and said predicted video data in order to obtain decoded video data,
a de-blocking filter (240) for filtering said decoded video data, which is output as decoded signal,
a de-graining filter (500) for de-graining said decoded video data after said de-blocking filtering in order to remove film grain from said decoded video data, and in order to obtain de-grain filtered video data, and
a memory (250) for storing said de-grain filtered video data as reference video data.

16. A decoding apparatus according to claim 15, wherein said video data including a plurality of subsequent images, and said memory (250) storing reference video data in image form.

17. A decoding apparatus according to claim 16, wherein said memory (250) storing a plurality of decoded images as reference images.

18. A decoding apparatus according to claim 17, wherein said prediction unit (260-280) selecting video data from one of said plurality of reference images from said memory (250) for obtaining said predicted video data.

19. A decoding apparatus according to any of claims 16 to 18, wherein the video data of each image being divided into a plurality of blocks which are individually decoded.

20. A decoding apparatus according to any of claims 15 to 19, wherein the filter characteristics of the de-graining filter (500) can be set adaptively by changing the filter coefficients.

21. A decoding apparatus according to claim 20, wherein a change of said filter coefficients or a parameter indicating the change being included within the encoded data.

22. A decoding apparatus according to claim 21, wherein said filter coefficients can be chagned to adapt the filter order or the filter strenth.

23. A decoding apparatus according to any of claims 15 to 22, further comprising a de-blocking filter (240) for filtering said decoded video data before applying said decoded video data to said de-graining filter (500) and wherein said de-graining filter (500) being set adaptively to the filtering result of said deblocking filter (240).

24. A decoding apparatus according to any of claims 15 to 23, wherein the filter characteristics of said de-graining filter (500) being set differently depending on the spatial location within an image for applying the de-graining fitter (500).

25. A decoding apparatus according to any of claims 15 to 24, wherein said de-graining filter (500) being of a motion compensated temporal fitter.

26. A decoding apparatus according to claim 25, wherein said received encoded video data including motion vectors (510) and said motion compensated temporal filter employing said received motion vectors (510).

27. A decoding apparatus according to claim 26, wherein said memory (140) further storing the motion vectors associated to said reference video data..

28. A decoding apparatus according to claim 27, wherein said motion compensated temporal filter obtaining reference video data (420) from said memory (140) together with the motion vectors associated thereto.

**Patentansprüche**

1. Verfahren zum Decodieren von Videodaten, das die folgenden Schritte umfasst:

   Empfangen codierter Videodaten, die Vorhersage-Information (210) enthalten,
   Dequantisieren und inverses Transformieren der codierten Videodaten (220),
   Vorhersagen der decodierten Videodaten auf Basis Entkörnungs-Filterung unterzogener Referenz-Videodaten entsprechend der empfangenen Vorhersage-Information (260, 270, 280),
   Addieren der dequantisierten und invers transformierten Videodaten und der vorhergesagten Videodaten, um decodierte Videodaten (230) zu erhalten,
   Anwenden einer Deblocking-Filterung auf die decodierten Videodaten (240),
   Ausgeben der decodierten Videodaten als decodiertes Signal nach der Deblocking-Filterung,
   Anwenden einer Entkörnungs-Filterung (500) auf die decodierten Videodaten nach der Deblocking-Filterung, um Film-Körnigkeit aus den decodierten Videodaten zu entfernen und einer Entkörnungs-Filterung unterzogene Videodaten zu erhalten, und
   Speichern der einer Entkörnungs-Filterung unterzogenen Videodaten in einem Speicher (250) als Referenz-Videodaten.

2. Verfahren nach Anspruch 1, wobei die Videodaten eine Vielzahl aufeinanderfolgender Bilder enthalten und der Speicher (250) Referenz-Videodaten in Bildform speichert.

3. Verfahren nach Anspruch 2, wobei der Speicher (250) eine Vielzahl decodierter Bilder als Referenz-Bilder speichert.

4. Verfahren nach Anspruch 3, wobei mit dem Vorhersage-Schritt Videodaten aus einem der Mehrzahl von Referenz-Bildern ausgewählt werden, um die vorhergesagten Videodaten zu erhalten.

5. Verfahren nach einem der Ansprüche 2 bis 4, wobei die Videodaten jedes Bildes in eine Mehrzahl von Blöcken unterteilt werden, die einzeln decodiert werden.

6. Verfahren nach einem der Ansprüche 1 bis 5, wobei die Filter-Eigenschaften der Entkörnungs-Filterung adaptiv festgelegt werden, indem die Filter-Koeffizienten der Entkörnungs-Filterung geändert werden.

7. Verfahren nach Anspruch 6, wobei eine Änderung der Filter-Koeffizienten oder ein Parameter, der die Änderung anzeigt, in den codierten Videodaten enthalten ist.

8. Verfahren nach Anspruch 7, wobei die Filter-Koeffizienten geändert werden, um die Filterordnung oder die Filterstärke anzupassen.

9. Verfahren nach einem der Ansprüche 1 bis 8, das des Weiteren den Schritt des Anwendens einer Deblocking-Filterung auf die decodierten Videodaten vor Anwenden der Entkörnungs-Filterung umfasst, und wobei die Filter-Eigenschaften der Entkörnungs-Filterung adaptiv gemäß dem Filterungsergebnis der Deblocking-Filterung eingestellt werden.

10. Verfahren nach einem der Ansprüche 1 bis 9, wobei die Filter-Eigenschaften der Entkörnungs-Filterung unterschiedlich in Abhängigkeit von der räumlichen Position innerhalb eines Bildes zum Anwenden der Entkörnungs-Filterung eingestellt werden.

11. Verfahren nach einem der Ansprüche 1 bis 10, wobei die Entkörnungs-Filterung in Form eines bewegungskompensierten zeitlichen Filters implementiert wird.

12. Verfahren nach Anspruch 11, wobei die empfangenen codierten Videodaten Bewegungsvektoren (510) enthalten und das bewegungskompensierte zeitliche Filter die empfangenen Bewegungsvektoren (510) verwendet.

13. Verfahren nach Anspruch 12, wobei in dem Schritt des Speicherns decodierter Videodaten als Referenz-Videodaten in dem Speicher (140) des Weiteren die zu den Referenz-Videodaten zugehörigen Bewegungsvektoren gespeichert werden.

14. Verfahren nach Anspruch 13, wobei das bewegungskompensierte zeitliche Filter Referenz-Videodaten (420) zusammen mit den dazu gehörenden Bewegungsvektoren aus dem Speicher (140) erhält.

15. Decodier-Vorrichtung zum Decodieren von Videodaten, die umfasst:

eine Dequantisierungs-Einheit und eine Einheit (220) zum inversen Transformieren, mit denen die codierten Videodaten dequantisiert und invers transformiert werden,
eine Vorhersageeinheit (260-280), mit der die decodierten Videodaten auf Basis einer Entkörnungs-Filterung unterzogener Referenz-Videodaten entsprechend zu Vorhersage-Information der codierten Videodaten vorhergesagt werden,
eine Addiereinrichtung (230), mit der die dequantisierten und invers transformierten Videodaten und die vorhergesagten Videodaten addiert werden, um decodierte Videodaten zu gewinnen,
ein Deblocking-Filter (240), mit dem die decodierten Videodaten gefiltert werden, die als decodiertes Signal ausgegeben werden,
ein Entkörnungs-Filter (500), mit dem die decodierten Videodaten nach der Deblocking-Filterung einer Entkörnungs-Filterung unterzogen werden, um Film-Körnigkeit aus den decodierten Videodaten zu entfernen und um einer Entkörnungs-Filterung unterzogene Videodaten zu erhalten, und
einen Speicher (250) zum Speichern der einer Entkörnungs-Filterung unterzogenen Videodaten als Referenz-Videodaten.

16. Decodiervorrichtung nach Anspruch 15, wobei die Videodaten eine Mehrzahl aufeinanderfolgender Bilder enthalten und der Speicher (250) Referenz-Videodaten in Bildform speichert.

17. Decodiervorrichtung nach Anspruch 16, wobei der Speicher (250) eine Vielzahl decodierter Bilder als Referenz-Bilder speichert.

**18.** Decodiervorrichtung nach Anspruch 17, wobei die Vorhersageeinheit (260-280) Videodaten aus einem der Mehrzahl von Referenz-Bildern aus dem Speicher (250) auswählt, um die vorhergesagten Videodaten zu erhalten.

**19.** Decodiervorrichtung nach einem der Ansprüche 16 bis 18, wobei die Videodaten jedes Bildes in eine Mehrzahl von Blöcken unterteilt werden, die einzeln decodiert werden.

**20.** Decodiervorrichtung nach einem der Ansprüche 15 bis 19, wobei die Filter-Eigenschaften des Entkörnungs-Filters (500) adaptiv festgelegt werden können, indem die Filter-Koeffizienten geändert werden.

**21.** Decodiervorrichtung nach Anspruch 20, wobei eine Änderung der Filter-Koeffizienten oder ein Parameter, der die Änderung anzeigt, in den codierten Daten enthalten ist.

**22.** Decodiervorrichtung nach Anspruch 21, wobei die Filter-Koeffizienten geändert werden können, um die Filterordnung oder die Filterstärke anzupassen.

**23.** Decodiervorrichtung nach einem der Ansprüche 15 bis 22, die des Weiteren ein Deblocking-Filter (240) umfasst, mit dem die decodierten Videodaten gefiltert werden, bevor die decodierten Videodaten dem Entkörnungs-Filter (500) zugeführt werden, und das Entkörnungs-Filter (500) adaptiv gemäß dem Filterungsergebnis des Deblocking-Filters (240) eingestellt wird.

**24.** Decodiervorrichtung nach einem der Ansprüche 15 bis 23, wobei die Filter-Eigenschaften des Entkörnungs-Filters (500) unterschiedlich in Abhängigkeit von der räumlichen Position innerhalb eines Bildes zum Anwenden des Entkörnungs-Filters (500) festgelegt werden.

**25.** Decodiervorrichtung nach einem der Ansprüche 15 bis 24, wobei das Entkörnungs-Filter (500) ein bewegungskompensiertes zeitliches Filter ist.

**26.** Decodiervorrichtung nach Anspruch 25, wobei die empfangenen codierten Videodaten Bewegungsvektoren (510) enthalten und das bewegungskompensierte zeitliche Filter die empfangenen Bewegungsvektoren (510) verwendet.

**27.** Decodiervorrichtung nach Anspruch 26, wobei der Speicher (140) des Weiteren die den Referenz-Videodaten zugehörenden Bewegungsvektoren speichert.

**28.** Decodiervorrichtung nach Anspruch 27, wobei das bewegungskompensierte zeitliche Filter Referenz-Videodaten (420) zusammen mit den damit dazu gehörenden Bewegungsvektoren aus dem Speicher (140) bezieht.

**Revendications**

**1.** Procédé de décodage de données vidéo, comprenant les étapes consistant à :

- recevoir des données vidéo codées incluant des informations de prédiction (210) ;
- déquantifier et inversement transformer lesdites données vidéo codées (220) ;
- prédire lesdites données vidéo décodées en se fondant sur des données vidéo de référence filtrées dégrainées suivant lesdites informations de prédiction reçues (260, 270, 280) ;
- additionner lesdites données vidéo déquantifiées et inversement transformées et lesdites données vidéo prédites pour obtenir des données vidéo décodées (230) ;
- appliquer un filtrage anti-blocs auxdites données vidéo décodées (240) ;
- délivrer en sortie les données vidéo décodées en tant que signal décodé après ledit filtrage anti-blocs ;
- appliquer un filtrage de dégrainage (500) auxdites données vidéo décodées après ledit filtrage anti-blocs afin d'éliminer le grain de film desdites données vidéo décodées et afin d'obtenir des données vidéo filtrées dégrainées ; et
- stocker lesdites données vidéo filtrées dégrainées dans une mémoire (250) en tant que données vidéo de référence.

**2.** Procédé selon la revendication 1, pour lequel lesdites données vidéo incluent une pluralité d'images successives et ladite mémoire (250) stocke les données vidéo de référence sous la forme d'images.

3. Procédé selon la revendication 2, pour lequel ladite mémoire (250) stocke une pluralité d'images décodées en tant qu'images de référence.

4. Procédé selon la revendication 3, pour lequel ladite étape de prédiction sélectionne des données vidéo provenant d'une image de ladite pluralité d'images de référence pour obtenir lesdites données vidéo prédites.

5. Procédé selon l'une quelconque des revendications 2 à 4, pour lequel les données vidéo de chaque image sont divisées en une pluralité de blocs décodés individuellement.

6. Procédé selon l'une quelconque des revendications 1 à 5, pour lequel les caractéristiques du filtre de filtrage de dégrainage sont fixées de manière adaptative en changeant les coefficients du filtre dudit filtrage de dégrainage.

7. Procédé selon la revendication 6, pour lequel un changement desdits coefficients du filtre ou un paramètre indiquant le changement est inclus dans les données vidéo codées.

8. Procédé selon la revendication 7, pour lequel lesdits coefficients du filtre sont changés pour adapter l'ordre du filtre ou l'efficacité du filtre.

9. Procédé selon l'une quelconque des revendications 1 à 8, comprenant en outre l'étape consistant à appliquer un filtrage anti-blocs auxdites données vidéo décodées avant d'appliquer ledit filtrage de dégrainage et pour lequel les caractéristiques du filtre dudit filtrage de dégrainage sont fixées en s'adaptant au résultat du filtrage dudit filtrage anti-blocs.

10. Procédé selon l'une quelconque des revendications 1 à 9, pour lequel les caractéristiques du filtre dudit filtrage de dégrainage sont fixées différemment suivant la position spatiale dans une image où est appliqué le filtrage de dégrainage.

11. Procédé selon l'une quelconque des revendications 1 à 10, pour lequel ledit filtrage de dégrainage est mis en oeuvre sous la forme d'un filtre temporel à compensation de mouvement.

12. Procédé selon la revendication 11, pour lequel lesdites données vidéo codées reçues incluent des vecteurs de mouvements (510) et pour lequel ledit filtre temporel à compensation de mouvement emploie lesdits vecteurs de mouvements (510) reçus.

13. Procédé selon la revendication 12, pour lequel ladite étape de stockage de données vidéo décodées en tant que données vidéo de référence dans ladite mémoire (140) stocke en outre les vecteurs de mouvements associés auxdites données vidéo de référence.

14. Procédé selon la revendication 13, pour lequel ledit filtre temporel à compensation de mouvement obtient des données vidéo de référence (420) depuis ladite mémoire (140) de même que les vecteurs de mouvements associés à celles-ci.

15. Appareil de décodage pour décoder des données vidéo, comprenant :

   - une unité de déquantification et une unité de transformée inverse (220) pour déquantifier et inversement transformer lesdites données vidéo codées ;
   - une unité de prédiction (260 à 280) pour prédire lesdites données vidéo décodées en se fondant sur des données vidéo de référence filtrées dégrainées suivant des informations de prédiction desdites données vidéo codées ;
   - un additionneur (230) pour additionner lesdites données vidéo déquantifiées et inversement transformées et lesdites données vidéo prédites pour obtenir des données vidéo décodées ;
   - un filtre anti-blocs (240) pour filtrer lesdites données vidéo décodées, qui sont délivrées en sortie en tant que signal décodé ;
   - un filtre de dégrainage (500) pour dégrainer lesdites données vidéo décodées après ledit filtrage anti-blocs afin d'éliminer le grain de film desdites données vidéo décodées et afin d'obtenir des données vidéo filtrées dégrainées ; et
   - une mémoire (250) pour stocker lesdites données vidéo filtrées dégrainées en tant que données vidéo de référence.

**16.** Appareil de décodage selon la revendication 15, dans lequel lesdites données vidéo incluent une pluralité d'images successives et ladite mémoire (250) stocke les données vidéo de référence sous la forme d'images.

**17.** Appareil de décodage selon la revendication 16, dans lequel ladite mémoire (250) stocke une pluralité d'images décodées en tant qu'images de référence.

**18.** Appareil de décodage selon la revendication 17, dans lequel ladite unité de prédiction (260 à 280) sélectionne des données vidéo provenant d'une image de ladite pluralité d'images de référence depuis ladite mémoire (250) pour obtenir lesdites données vidéo prédites.

**19.** Appareil de décodage selon l'une quelconque des revendications 16 à 18, dans lequel les données vidéo de chaque image sont divisées en une pluralité de blocs décodés individuellement.

**20.** Appareil de décodage selon l'une quelconque des revendications 15 à 19, dans lequel les caractéristiques de filtrage du filtre de dégrainage (500) peuvent être fixées de manière adaptative en changeant les coefficients du filtre.

**21.** Appareil de décodage selon la revendication 20, dans lequel un changement desdits coefficients du filtre ou un paramètre indiquant le changement est inclus dans les données vidéo codées.

**22.** Appareil de décodage selon la revendication 21, dans lequel lesdits coefficients du filtre peuvent être changés pour adapter l'ordre du filtre ou l'efficacité du filtre.

**23.** Appareil de décodage selon l'une quelconque des revendications 15 à 22, comprenant en outre un filtre anti-blocs (240) pour filtrer lesdites données vidéo décodées avant d'appliquer lesdites données vidéo décodées audit filtre de dégrainage (500) et dans lequel ledit filtre de dégrainage (500) est paramétré en s'adaptant au résultat du filtrage dudit filtre anti-blocs (240).

**24.** Appareil de décodage selon l'une quelconque des revendications 15 à 23, dans lequel les caractéristiques de filtrage dudit filtre de dégrainage (500) sont fixées différemment suivant la position spatiale dans une image où est mis en oeuvre le filtre de dégrainage (500).

**25.** Appareil de décodage selon l'une quelconque des revendications 15 à 24, dans lequel ledit filtre de dégrainage (500) est un filtre temporel à compensation de mouvement.

**26.** Appareil de décodage selon la revendication 25, dans lequel lesdites données vidéo codées reçues incluent des vecteurs de mouvements (510) et ledit filtre temporel à compensation de mouvement emploie lesdits vecteurs de mouvements (510) reçus.

**27.** Appareil de décodage selon la revendication 26, dans lequel ladite mémoire (140) stocke en outre les vecteurs de mouvements associés auxdites données vidéo de référence.

**28.** Appareil de décodage selon la revendication 27, dans lequel ledit filtre temporel à compensation de mouvement obtient des données vidéo de référence (420) depuis ladite mémoire (140) de même que les vecteurs de mouvements associés à celles-ci.

## Fig. 1

Fig. 2

EP 1 641 274 B1

Fig. 3

EP 1 641 274 B1

Fig. 4

Input Signal

110

Transform / Quantization

120

Quantized Coefficients

Entropy Coding

190

inv. Quant. / inv. Transform

130

135

Prediction Signal

Deblocking Filter

137

Degraining Filter

400

410

150

Intra-Frame Prediction

420

180

Motion Comp. Prediction

160

Memory

140

Intra / Inter

170

Motion Estimation

Motion Data

400

In case of a motion compensated degraining filter

EP 1 641 274 B1

Fig. 5

In case of a motion
compensated degraining filter

EP 1 641 274 B1

already transmitted reference images

reference image to filter

image to code

MV to be transmitted

already transmitted MV

$a_i$    filter coefficient

# Fig. 6

EP 1 641 274 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHRISTINA GOMILA.** SEI message for film grain encoding. *Joint Video Team of ISO/IEC MPEG & ITU-T VCEG,* 23 May 2003, 1-14

- An overview of H.264 / MPEG-4 part 10. Proceedings of Multimedia Communications. July 2003, 1-51
- Status of the Emerging ITU-T/H.264. *Proceedings of the SPIE,* July 2002, 261-277